(19) Europäisches Patentamt
European Patent Office
Office européen des brevets

(11) **EP 3 268 146 B1**

(12) **EUROPEAN PATENT SPECIFICATION**

(45) Date of publication and mention
of the grant of the patent:
**09.09.2020 Bulletin 2020/37**

(51) Int Cl.:
***B21J 5/00*** *(2006.01)*       ***B22F 3/105*** *(2006.01)*

(21) Application number: **16712615.0**

(22) Date of filing: **14.03.2016**

(86) International application number:
**PCT/US2016/022331**

(87) International publication number:
**WO 2016/149196 (22.09.2016 Gazette 2016/38)**

(54) **METHODS OF PRODUCING WROUGHT PRODUCTS WITH INTERNAL PASSAGES**

VERFAHREN ZUR HERSTELLUNG VON SCHMIEDEPRODUKTEN MIT INTERNEN DURCHLÄSSE

PROCÉDÉS DE FABRICATION DE PRODUITS FORGÉS AVEC DES PASSAGES INTERNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2015 US 201562132613 P**

(43) Date of publication of application:
**17.01.2018 Bulletin 2018/03**

(73) Proprietor: **Howmet Aerospace Inc.
Pittsburgh, PA 15212-5858 (US)**

(72) Inventors:
• **KILMER, Raymond, J.**
**Pittsburgh, PA 15238 (US)**
• **SAMPLE, Vivek**
**Murrysville, PA 15668 (US)**
• **FULTON, Erin, J.**
**Irwin, PA 15642 (US)**
• **BURG, James, T.**
**Verona, PA 15147 (US)**
• **BOGAN, Eric, G.**
**Cabot, PA 16023 (US)**

• **BREM, Jason, C.**
**New Kensington, PA 15068 (US)**
• **SPEER, Robert, J.**
**Upper Burrell, PA 15068 (US)**
• **LEITH, William, B.**
**Apollo, PA 15613 (US)**
• **CARDINALE, Michael**
**Apollo, PA 15613 (US)**
• **GACKA, Philip**
**Allison Park
PA 15101 (US)**

(74) Representative: **Barton, Matthew Thomas
Forresters IP LLP
Skygarden
Erika-Mann-Strasse 11
80636 München (DE)**

(56) References cited:
EP-A1- 2 551 040          CN-A- 1 861 296
US-A1- 2013 039 799       US-A1- 2013 098 575
US-A1- 2015 013 144

## Description

## BACKGROUND

Additive manufacturing (AM) provides an unprecedented means of manufacturing 3D shapes with complex internal geometries hitherto not possible by conventional manufacturing processes.
US 2013/0039799 discloses a method of manufacturing a product including forming a metal powder into a desired shape. The described method comprises the steps of additively manufacturing a feedstock material to create an AM preform, wherein the AM preform is configured with a body having an internal passage defined therein, wherein the internal passage further includes at least one of a void and a channel;inserting a filler material into the internal passage of the AM preform; and deforming the AM preform to a sufficient amount to create a product having an internal passage therein, wherein the product is configured with wrought properties for that material via the deforming step.
EP 2551040 discloses a method for manufacturing a homogeneous near net-shape component.
US 2015/0013144 discloses methods for producing forged products.
US 2013/0098575 discloses a process for manufacturing forgings.
CN 1861296 discloses a method for forming a near net shape.

## FIELD OF THE INVENTION

Broadly, the instant disclosure relates to improved methods for producing worked metal products (e.g., forged metal products; other types of hot worked and/or cold worked metal products) using an AM preform (i.e. a preform made via additive manufacturing). More specifically, the instant disclosure is directed towards methods for making an AM preform (e.g. metal AM preform) into a product that (1) includes at least one interior/internal void and/or (2) corresponds to final wrought properties for that part.

## SUMMARY

Additive manufacturing enables parts of varying configurations and dimensions to be constructed. However, with many feedstock materials, the AM part includes properties attributable from the AM build, which can differ greatly from the desired properties (e.g. strength, grain structure, etc) for the end use application. One or more methods of the instant disclosure are directed towards creating a product that has wrought properties (i.e. deforming an AM preform), where the product includes at least one internal passage (e.g. each passage including a void and/or a channel). In some embodiments, wrought properties include, but not limited to: a wrought microstructure (e.g. recrystallized grains, removal of AM grain structure) while providing a higher toughness (and in some cases higher strength)).
In some embodiments, the microstructure and properties of the AM components can be significantly improved by subsequent working to convert the as built (as cast) structure to wrought structure. Thus, internal features in the AM preform (such as cooling passages) need to be protected from collapsing and cracking during deformation. Some non-limiting examples of AM preforms for certain applications having internal passages include: closed die forgings and/or hipping operations, in which hydrostatic pressures (i.e. pressures experienced by the internal passages) can far exceed the pressures (e.g. deformation pressures experienced by the body of the AM preform) during open die forgings. Also, one has to account for the change in geometry of these features to obtain the final desired shape.
One or more methods of the instant disclosure are directed towards: (1) deforming while conserving the internal passage(s) created during the AM process to promote an appropriate shape change (AM Preform to Product) without cracking and/or collapsing of the AM part or internal passage(s); (2) prescribing the AM Preform shape geometry (external profile/body as well as internal passages) so that the final geometry of the product is attainable in a deformation (e.g. single forging) step (i.e. explicitly accounting for deformation and/or deformation boundary conditions (friction and temperature)); and/or obtaining a wrought structure to improve the properties of the complex component (i.e. body having internal passage(s)) manufactured by an AM process.
In one aspect, a method according to claim 1 is provided.
In some embodiments, the closing step further comprises sealing the filler material within the AM preform via an enclosure component.
In some embodiments, the closing step further comprises pressing a plug into an opening in the body to retain the filler material within the internal passage.
In some embodiments, the deforming step further comprises forging.
In some embodiments, the deforming step further comprises a single die forging.
In some embodiments, the deforming step further comprises rolling.
In some embodiments, the deforming step further comprises ring rolling.
In some embodiments, the deforming step further comprises extruding.
In some embodiments, the method further includes: removing the filler material from the internal passage of the product.
In some embodiments, the removing step further comprises: opening the sealed product having filler material therein; melting the filler material; and draining the filler material from the product.
In some embodiments, the removing step further comprises: annealing the product.

In some embodiments, the method further comprises cold working the product.

In some embodiments, the method further comprises: hot working the product.

In some embodiments, the method comprises finishing the surface of the product.

In some embodiments, finishing is selected from the group consisting of: machining, polishing, surface finishing, and/or combinations thereof.

In some embodiments, the deforming step further comprises: prior to deforming, preheating the AM preform to melt the filler material retained within the internal passage.

In some embodiments, the deforming step further comprises waiting a sufficient duration of time for the filler material to solidify in the internal passage; and deforming the AM preform having a solidified filler material therein.

In some embodiments, the method further comprises:

selecting a target product having target wrought properties; designing a target AM preform with a target preform body dimension and a target preform void dimension, wherein the target AM preform is configured to undergo a deformation step and provide the target product having: a target product body dimension and a target product void dimension; additively manufacturing an AM preform having a preform body with a preform body dimension and a void with a preform void dimension, wherein the preform body dimension corresponds to the target preform body dimension, further wherein the preform void dimension corresponds to the target preform void dimension; and deforming the AM preform to a sufficient amount to form a product having wrought properties corresponding to the target wrought properties, wherein the AM preform is configured with a filler material enclosed via an enclosure component in the void; further wherein product is configured with a product body having a product body dimension and a product void having a product void dimension, wherein, via the design step, the product body dimension corresponds to the target product body dimension and the product void dimension corresponds to the target product void dimension.

In some embodiments, the method further comprises:

designing a target AM preform with a target preform body dimension, a target preform void dimension, and target wrought properties, wherein the target AM preform is configured to undergo a deformation step and provide the target product having: a target product body dimension and a target product void dimension; additively manufacturing an AM preform having a preform body with a preform body dimension and a void with a preform void dimension, wherein the preform body dimension corresponds to the target preform body dimension, further wherein the preform void dimension corresponds to the target preform void dimension; and deforming the AM preform to a sufficient amount to form a product having wrought properties corresponding to the target wrought properties, wherein the AM preform is configured with a filler material enclosed via an enclosure component in the void; further wherein product is configured with a product body having a product body dimension and a product void having a product void dimension, wherein, via the design step, the product body dimension corresponds to the target product body dimension and the product void dimension corresponds to the target product void dimension.

As used herein, "corresponds" means to be in agreement and/or conformation with. As a non-limiting example, the product may have properties and/or dimensions that correspond to the target product properties and/or dimensions. As another non-limiting example, the AM preform may have properties and/or dimensions that correspond to the target AM Preform properties and/or dimensions.

In some embodiments, corresponds refers to corresponding wrought properties, such that the product is enabled to be used in the same way (e.g. particular application) with the same success and results (i.e. within specification and property limits for that product part) as that predicted for the target product wrought properties.

In some embodiments, corresponds refers to corresponding dimensions of the body and/ or internal passage (channel and/or void) that enables the AM preform to be deformed appropriately and/or the product to be used in the same way (e.g. particular application) with the same success and results (i.e. within specification and property limits for that product part) as that predicted for the target product dimensions.

As non-limiting examples, corresponding the product to the target may be measured qualitatively (i.e. the product is within spec and works for the particular purpose/end use application) or quantitatively (i.e. product properties (or average particle properties) are within a percentage of or specific threshold or range of a particular parameter.

As used herein: "filler material" means: a material configured to fill a void or area. In some embodiments, the filler material is configured to fill the internal passage(s) in an AM preform, where the internal passage(s) include at least one of: an interior/internal void and a channel. Some non-limiting examples of filler materials (incompressible materials) include: oils, polymers, organic and/or inorganic solvents (e.g. water) metals and/or metal alloys, including tin, tin alloys, copper, copper alloys, and combinations thereof.

In some embodiments, the filler material is chosen so as to be in a fluid state during the subsequent high temperature operations. In some embodiments, the filler material is chosen so as to be in a liquid state during the subsequent high temperature operations.

In some embodiments, the filler material is compliant and/or incompressible. In some embodiments, the filler material is configured to provide reaction to the hydrostatic stresses that are imposed during a forging operation without constraining the bulk deformation. In some embodiments, the filler material is a liquid. In some embodiments, the filler material is a solid (e.g. during deformation). In some embodiments, the filler material is this regard, an inert liquid which does not undergo significant surface reactions with the AM Preform.

In some embodiments, the liquid filler material is enclosed within the AM preform. In some embodiments, the liquid filler material in the AM preform is restricted from leaking from the AM preform during the deformation step. In some embodiments, the AM preform is sealed (with an enclosure component) to prevent the liquid filler material from leaking from the AM preform during deformation.

In some embodiments, the filler material is a solid material that is configured with a low flow stress would also be applicable. In some embodiments, the solid material is configured with a melting point such that it can be inserted into the AM preform (e.g. filled easily) and is solid at deformation conditions (e.g. temperature). In some embodiments, the solid filler material is configured to be filled into the internal passages of the AM preform and removed from the internal passages product easily (i.e. melting point above deformation temperature, but not too high as to impact the wrought properties obtained in the deformation step with removing the filler material from the product).

In some embodiments, the AM preform is configured with a body having/including at least one internal passage (e.g. void and/or channel), where the body is configured with a preform body dimension (e.g. size and shape) and the void is configured with a preform void dimension (e.g. size and shape) such that, via the deformation step, the body, including the void, undergoing a deformation to create a product (i.e. the product having body with a product body dimension and a void with a product void dimension, where the product dimensions of the body and void (after deformation) differ from the preform dimensions of the body and the void). In some embodiments, the filler material is removed from the product to provide a product having wrought properties and internal passages (e.g. voids).

In one embodiment, a method includes using additive manufacturing to produce an AM preform (e.g. a metal shaped-preform) having at least one passage (e.g. internal passage). After the using step, inserting (e.g. filling) a filler material (e.g. incompressible material) into the passage. The passage is filled with the filler material and the filler material is enclosed within the body of the AM preform (e.g. sealed shut). After the inserting step, the AM preform is deformed (e.g. plastically deformed) into a product (e.g. final deformed product) having a corresponding deformed passage.

In this embodiment, the filler material/incompressible material is configured to provide stability (e.g. compressive force) to the interior wall of the body (defining the passage) such that the inner wall of the body defining the passage is configured to prevent, reduce and/or eliminate cracking and/or collapsing of the passage during the deformation step. Through one or more of the instant methods, an AM preform configured with at least one internal passage undergoes a deformation step to provide a product having wrought properties and an internal passage, wherein the passage is configured in the product after the deformation step, and the product is configured with wrought properties.

As used herein: "AM preform" means: an additive manufacturing part built with a particular dimension (i.e. size and/or shape). In some embodiments, the AM preform is configured to undergo a deformation step to create the product. IN some embodiments, the AM preform is a metal-shaped preform.

In some embodiments, the AM preform may be comprised of a high entropy alloy. In one embodiment, the metal preform comprises at least one of titanium, aluminum, nickel, steel, and stainless steel. In one embodiment, the metal shaped-preform may be a titanium alloy. In another embodiment, the metal shaped-preform may be an aluminum alloy. In yet another embodiment, the metal shaped-preform may be a nickel alloy. In yet another embodiment, the metal shaped-preform may be one of a steel and a stainless steel. In another embodiment, the metal shaped-preform may be a metal matrix composite. In yet another embodiment, the metal shaped-preform may comprise titanium aluminide.

As used herein: "internal passage" means: at least one of a void and a channel configured within a body of an AM preform. In some embodiments, the internal passage is defined by an inner sidewall of the body of the AM preform, which extends down into the body of the AM preform via an opening in the outer sidewall of the AM preform.

As used herein: "enclosure" means: an area that is sealed off with a barrier. In some embodiments, the AM preform includes an enclosure (e.g. enclosure device) to retain the filler material (i.e. liquid filler material) in the internal passage (i.e. at least one of: a void and a channel). Some non-limiting examples of enclosures include: mechanical attachment devices, caps, plugs, threaded plugs, welded plugs, welded enclosures, additively manufactured layers, and/or a combination thereof.

As used herein, "deformation" means: a process configured to distort preform into the shape of a product. There are many processing parameters to achieve deformation including forging, rolling, extrusion, and combinations thereof, and the like.

In some embodiments, the deforming step may comprise multiple deforming steps. In some embodiments, the deforming step may comprise a single deforming step. In some embodiments, the final desired shape may be achieved with a single deforming step. In some embodiments, deforming comprises at least one of: forging, thermomechanical processing, and cold working.

In one embodiment, forging comprises a single die forging step.

In some embodiments, the deformation (e.g. plastic deformation) is conducted at temperatures in which the filler material is trapped hydrostatically and the passages maintain the desired contiguous shape for the final application.

In some embodiments, the AM preform is configured (e.g. optimized) using computer modeling software. One non-limiting example of computer modeling is finite element modeling, including reverse 3-D modeling. In some embodiments, the modeling, designing step is configured to promote/ensure that a desired (target) wrought structure and geometry (target dimension) is achieved with minimal work (i.e. post deformation working), while accounting for frictional and thermal boundary conditions of the deformation process.

In some embodiments, the passage is on the interior of the shaped-preform (e.g. internal to the body). In some embodiments, the fluid is a liquid. Any suitable filler material that has sufficient hydrostatic and desired chemical properties under the deforming condition (i.e. non-reactive with the surface of the AM preform) to result in passages having the desired shape in the final product may be used.

In some embodiments, the passage (i.e. internal channel) changes shape during the deforming step.

In some embodiments, the passage (i.e. internal channel) maintains shape during the deforming step.

In some embodiments, the method further comprises sealing the passage after the inserting step. In some embodiments, the method further comprises unsealing the passage (removing the enclosure/enclosure component) after the deforming step. In some embodiments, the passage is sealed with an inert metal having a relatively low melting point, such as tin, and/or a glass, such as boron oxide.

Forging may comprise heating the metal shaped-preform to a stock temperature, and contacting the metal shaped-preform with a forging die. In one embodiment, when the contacting step is initiated, the forging die may be a temperature that is at least 10°F lower than the stock temperature. In another embodiment, when the contacting step is initiated, the forging die is a temperature that is at least 25°F lower than the stock temperature. In yet another embodiment, when the contacting step is initiated, the forging die is a temperature that is at least 50°F lower than the stock temperature. In another embodiment, when the contacting step is initiated, the forging die is a temperature that is at least 100°F lower than the stock temperature. In yet another embodiment, when the contacting step is initiated, the forging die is a temperature that is at least 200°F lower than the stock temperature.

In some embodiments, deforming comprises at least one of: (i) rolling, (ii) ring rolling, (iii) ring forging, (iv) shaped rolling, (v) extruding, and (vi) combinations thereof, in addition to forging.

As used herein, "ring rolling" means the process of rolling a ring of smaller diameter (e.g., a first ring having a first diameter) into a ring of larger diameter (e.g, a second ring having a second diameter, wherein the second diameter is larger than the first diameter), optionally with a modified cross section (e.g., a cross sectional area of the second ring is different than a cross sectional area of the first ring) by the use of two rotating rollers, one placed in the inside diameter of the ring and the second directly opposite the first on the outside diameter of the ring. As used herein, "ring forging" means the process of forging a ring of smaller diameter (e.g., a first ring having a first diameter) into a ring of larger diameter (e.g, a second ring having a second diameter, wherein the second diameter is larger than the first diameter), optionally with a modified cross section (e.g., a cross sectional area of the second ring is different than a cross sectional area of the first ring) by squeezing the ring between two tools or dies, one on the inside diameter and one directly opposite on the outside diameter of the ring. As used herein, "shaped rolling" means the process of shaping or forming by working the piece (i.e., the metal shaped-preform) between two or more rollers, which may or may not be profiled, to impart a curvature or shape to the work piece (i.e., the metal shaped-preform).

In some embodiments, the deforming step comprises heating the metal shaped-preform to a stock temperature, and contacting the metal shaped-preform with a forging die. In this regard, the contacting step may comprise deforming the metal shaped-preform via the forging die. In one embodiment, the contacting step comprises deforming the metal shaped-preform via the forging die to realize a true strain of from 0.05 to 1.10 in the metal shaped-preform. In another embodiment, the contacting step comprises deforming the metal shaped-preform via the forging die to realize a true strain of at least 0.10 in the metal shaped-preform. In yet another embodiment, the contacting step comprises deforming the metal shaped-preform via the forging die to realize a true strain of at least 0.20 in the metal shaped-preform. In another embodiment, the contacting step comprises deforming the metal shaped-preform via the forging die to realize a true strain of at least 0.25 in the metal shaped-preform. In yet another embodiment, the contacting step comprises deforming the metal shaped-preform via the forging die to realize a true strain of at least 0.30 in the metal shaped-preform. In another embodiment, the contacting step comprises deforming the metal shaped-preform via the forging die to realize a true strain of at least 0.35 in the metal shaped-preform. In another embodiment, the contacting step comprises deforming the metal shaped-preform via the forging die to realize a true strain of not greater than 1.00 in the metal shaped-preform. In yet another embodiment, the contacting step comprises deforming the metal shaped-preform via the forging die to realize a true strain of not greater than 0.90 in the metal shaped-preform. In another embodiment, the contacting step comprises deforming the metal shaped-preform via the forging die to realize a true strain of not greater than 0.80 in the metal shaped-preform. In yet another embodiment, the contacting step comprises deforming the metal shaped-preform via the forging die to realize a true strain of not greater than 0.70 in the metal shaped-preform. In another embodiment, the contacting step comprises deforming the metal shaped-preform via the forging die to realize a true strain of not greater than 0.60 in the metal shaped-preform. In yet another embodiment, the contacting step comprises deforming the metal shaped-preform via the forging die to realize a true strain of not greater than 0.50 in the metal shaped-preform. In another embodiment, the contacting step comprises deforming the metal shaped-preform via the forging die to realize a true strain of not greater than 0.45 in the metal shaped-preform. As used herein "true strain" ($\varepsilon_{true}$) is given by the formula:

$$\varepsilon_{true} = \ln(L/L_0)$$

Where $L_0$ is initial length of the material and L is the final length of the material.

In one aspect, the step of using additive manufacturing to produce a metal shaped-preform may comprise adding material, via additive manufacturing, to a building substrate thereby producing the metal shaped-preform. In one embodiment, the material is a first material having a first strength and wherein the building substrate is comprised of a second material having a second strength. The first material may have a first fatigue property and the second material may have a second fatigue property. For example, a layer of a first material having low strength and high toughness could be added, via additive manufacturing, to a building substrate comprised of a second material having high strength and low toughness, thereby producing a metal-shaped preform useful, for example, in ballistic applications.

In one embodiment, the building substrate comprises a first ring of a first material, and the using step comprises adding a second material, via additive manufacturing, to the first ring thereby forming a second ring, wherein the second ring is integral with the first ring.

In some embodiments, the shaped-preform may realize a first amount of residual stress due to, at least in part, the additive manufacturing step. After the additive manufacturing and inserting a filler material into the passage, at least a portion of the additively manufactured shaped-preform may be cold worked, thereby relieving stress in cold worked portions of the shaped-preform. At least some of the cold worked portions of the shaped-preform may realize a second amount of residual stress due, at least in part, to the cold working step, wherein the second amount of residual stress is lower than the first amount of residual stress. Optionally, after the cold working, the shaped-preform may be thermally treated at temperatures of not greater than 450°F (232.2°C) to potentially further stress relieve and/or strengthen the shaped-preform.

Additive manufacturing (3-D printing) is a process where layers of a material are deposited one after another using various techniques. Additive manufacturing may include powder bed technology such as Selective Laser Sintering (SLS), Selective Laser Melting (SLM), and Electron Beam Melting (EBM), among others. Additive manufacturing may also include wire extrusion technologies such as Fused Filament Fabrication (FFF), among others. Suitable additive manufacturing systems include the EOSINT M 280 Direct Metal Laser Sintering (DMLS) additive manufacturing system, available from EOS GmbH (Robert-Stirling-Ring 1, 82152 Krailling/Munich, Germany). Thus, precisely designed products can be produced.

The metal shaped-preform may be made from any metal suited for both additive manufacturing and deforming, including, for example metals or alloys of titanium, aluminum, nickel (e.g., INCONEL), steel, stainless steel, and high entropy alloys among others. An alloy of titanium is an alloy having titanium as the predominant alloying element. An alloy of aluminum is an alloy having aluminum as the predominant alloying element. An alloy of nickel is an alloy having nickel as the predominant alloying element. An alloy of steel is an alloy having iron as the predominant alloying element, and at least some carbon. An alloy of stainless steel is an alloy having iron as the predominant alloying element, at least some carbon, and at least some chromium. A high entropy alloy is an alloy having at least five principal elements, each of which has an atomic concentration between 5% and 35%.

As discussed above, additive manufacturing may be used to produce a shaped-preform. An aluminum alloy body is a body comprising aluminum and at least one other substance, wherein the aluminum comprises at least 50 wt. % of the body. Examples of aluminum alloys that may be in additively manufactured include the 1xxx, 2xxx, 3xxx, 4xxx, 5xxx, 6xxx, 7xxx, and 8xxx aluminum series alloys, as defined by The Aluminum Association. In one embodiment, the aluminum alloy is a 1xxx series aluminum alloy. In one embodiment, the aluminum alloy is a 2xxx series aluminum alloy. In one embodiment, the aluminum alloy is a 3xxx series aluminum alloy. In one embodiment, the aluminum alloy is a 4xxx series aluminum alloy. In one embodiment, the aluminum alloy is a 5xxx series aluminum alloy. In one embodiment, the aluminum alloy is a 6xxx series aluminum alloy. In one embodiment, the aluminum alloy is a 7xxx series aluminum alloy. In one embodiment, the aluminum alloy is a 8xxx series aluminum alloy.

In one aspect, residual stress may be imparted to the shaped-preform, for example, via the additive manufacturing process. As used herein, "residual stress" is the stress present in a shaped-preform in the absence of external load on the shaped-preform. Residual stress of a shaped-preform may be measured via the "Slitting Method", as described in "Experimental Procedure for Crack Compliance (Slitting) Measurements of Residual Stress," by M. B. Prime, LA-UR-03-8629, Los Alamos National Laboratory Report, 2003 procedure. Residual stress may be measured in units of 1,000 pounds per square inch (ksi). Residual stress may comprise compressive residual stress and/or tensile residual stress. Compressive residual stress may be expressed as a negative value, e.g., -15 ksi. Tensile stress may be expressed as a positive value, e.g., 10 ksi. Accordingly, a second amount of residual stress being "lower" than a first amount of residual stress means that the magnitude (i.e., absolute value) of the second amount of stress is smaller than the magnitude of the first amount of residual stress.

As discussed above, after the using step and inserting a filler material into the passage, at least a portion of the additively manufactured shaped-preform may be cold worked, thereby relieving stress in cold worked portions of the shaped-preform. As used herein, "cold working" and the like means deforming a shaped-preform in at least one direction and at temperatures below hot working temperatures (e.g., not greater than 250°F (121.1°C)). Cold working may be imparted by one or more of compressing, stretching, and combinations thereof, among other types of cold working methods. Compressing means pushing at least one surface of a shaped-preform in order to deform the shaped-preform by reducing at least one dimension of the shaped-preform. Compressing includes rolling, forging and combinations thereof. Stretching means pulling a shaped-preform in order to deform the alloy body by expanding at least one dimension of the shaped-preform.

In one embodiment, the cold working of the shaped-preform may be uniform (i.e., all parts of the shaped-preform may realize essentially the same amount of deformation). In another embodiment, the cold working of the shaped-preform may be non-uniform (i.e., different parts of the shaped-preform may realize different amounts of deformation). In one aspect, the cold working of the shaped-preform may comprise cold working all of the shaped-preform (e.g., all parts of the shaped-preform may realize at least some deformation throughout the volume of the shaped-preform). In one embodiment, the cold working may comprise cold deforming all parts of the shaped-preform by at least 0.1%. In another embodiment, the cold working may comprise cold deforming all parts of the shaped-preform by at least 0.2%. In yet another embodiment, the cold working may comprise cold deforming all parts of the shaped-preform by at least 0.3%. In another embodiment, the cold working may comprise cold deforming all parts of the shaped-preform by at least 0.4%. In yet another embodiment, the cold working may comprise cold deforming all parts of the shaped-preform by at least 0.5%. In another embodiment, the cold working may comprise cold deforming all parts of the shaped-preform by at least 0.6%. In yet another embodiment, the cold working may comprise cold deforming all parts of the shaped-preform by at least 0.7%. In another embodiment, the cold working may comprise cold deforming all parts of the shaped-preform by at least 0.8%. In yet another embodiment, the cold working may comprise cold deforming all parts of the shaped-preform by at least 0.9%. In another embodiment, the cold working may comprise cold deforming all parts of the shaped-preform by at least 1.0%. In yet another embodiment, the cold working may comprise cold deforming all parts of the shaped-preform by at least 1.5%. In another embodiment, the cold working may comprise cold deforming all parts of the shaped-preform by at least 2.0%. In yet another embodiment, the cold working may comprise cold deforming all parts of the shaped-preform by at least 3.0%. In another embodiment, the cold working may comprise cold deforming all parts of the shaped-preform by at least 4.0%. In yet another embodiment, the cold working may comprise cold deforming all parts of the shaped-preform by at least 5.0%.

In another aspect, the cold working of the shaped-preform may comprise cold working only a portion of the shaped-preform (i.e., some parts of the shaped-preform may realize at least some deformation, while other parts of the shaped-preform may realize no deformation). In one embodiment, the cold working comprises cold deforming only a portion of the shaped-preform by at least 0.1%. In another embodiment, the cold working comprises cold deforming only a portion of the shaped-preform by at least 0.2%. In yet another embodiment, the cold working comprises cold deforming only a portion of the shaped-preform by at least 0.3%. In another embodiment, the cold working comprises cold deforming only a portion of the shaped-preform by at least 0.4%. In yet another embodiment, the cold working comprises cold deforming only a portion of the shaped-preform by at least 0.5%. In another embodiment, the cold working comprises cold deforming only a portion of the shaped-preform by at least 0.6%. In yet another embodiment, the cold working comprises cold deforming only a portion of the shaped-preform by at least 0.7%. In another embodiment, the cold working comprises cold deforming only a portion of the shaped-preform by at least 0.8%. In yet another embodiment, the cold working comprises cold deforming only a portion of the shaped-preform by at least 0.9%. In another embodiment, the cold working comprises cold deforming only a portion of the shaped-preform by at least 1.0%. In yet another embodiment, the cold working comprises cold deforming only a portion of the shaped-preform by at least 1.5%. In another embodiment, the cold working comprises cold deforming only a portion of the shaped-preform by at least 2.0%. In yet another embodiment, the cold working comprises cold deforming only a portion of the shaped-preform by at least 3.0%. In another embodiment, the cold working comprises cold deforming only a portion of the shaped-preform by at least 4.0%. In yet another embodiment, the cold working comprises cold deforming only a portion of the shaped-preform by at least 5.0%.

In one embodiment, during the cold working step, the temperature of the shaped-preform is not greater than 250°F (121.1°C). In another embodiment, during the cold working step, the temperature of the shaped-preform is not greater than 225°F (107.2°C). In yet another embodiment, during the cold working step, the temperature of the shaped-preform is not greater than 200°F (93.3°C). In another embodiment, during the cold working step, the temperature of the shaped-preform is not greater than 175°F (79.4°C). In yet another embodiment, during the cold working step, the temperature of the shaped-preform is not greater than 150°F (65.6°C). In yet another embodiment, during the cold working step, the temperature of the shaped-preform is not greater than 125°F (51.7°C). In yet another embodiment, during the cold working step, the temperature of the shaped-preform is not greater than 100°F (37.8°C). In one embodiment, the cold working step is initiated when the shaped-preform is at ambient temperature.

In one embodiment, the cold working may occur only after the using additive manufacturing step is complete (e.g., only the final version of the additively manufactured alloy body is cold worked). Thus, prior to the cold working step, the method may be free of any other cold working steps. In one embodiment, the cold working step comprises cold deforming the shaped-preform by not greater than 25%. In another embodiment, the cold working step comprises cold deforming the shaped-preform by not greater than 20%. In yet another embodiment, the cold working step comprises cold deforming the shaped-preform by not greater than 15%. In another embodiment, the cold working step comprises cold deforming the shaped-preform by not greater than 14%. In yet another embodiment, the cold working step comprises cold deforming the shaped-preform by not greater than 13%. In another embodiment, the cold working step comprises cold deforming the shaped-preform by not greater than 12%. In yet another embodiment, the cold working step comprises cold deforming the shaped-preform by not greater than 11%. In another embodiment, the cold working step comprises cold deforming the shaped-preform by not greater than 10%.

In one aspect, relieving residual stress in the additively manufactured shaped-preform via the above-described methods may provide improved strength properties as compared to relieving residual stress via annealing the shaped-preform. For example, the shaped-preform may realize increased tensile yield strength as compared to a similar shaped-preform which has been annealed to relieve stress. Thus, in one embodiment, the method of production is free of any anneal and/or solution heat treatment step between the using additive manufacturing step and the cold working step. Thus, during production of the shaped-preform, after the additively manufacturing step, the shaped-preform may be maintained at a temperature of not greater than 450°. In other embodiments, during production of the shaped-preform, after the additively manufacturing step, the shaped-preform is maintained at a temperature of not greater than 400°F, such as not greater than 375°F, or not greater than 350°F, or not greater than 325°F, or not greater than 300°F, or not greater than 275°F, or not greater than 250°F, or not greater than 225°F, or not greater than 200°F, or not greater than 175°F, or not greater than 150°F, or not greater than 125°F, or not greater than 100°F, or not greater than ambient (not including any heat generated due to the cold working step).

In other embodiments, after the cold working step, the shaped-preform may be thermally treated. The thermal treatment may further stress relieve and/or strengthen one or more portions of the shaped-preform. For instance, for precipitation hardenable alloys, the thermal treatment may result in precipitation hardening of one or more portion of the shaped-preform. The thermal treatment may also or alternatively stress relieve the shaped-preform. This optional thermal treatment step may occur at a temperature of from, for example, 175°F (79.4°C) to 450°F (232.2°C) and from several minutes to several hours, depending on temperature.

By deforming the metal shaped-preform, the final product may realize improved properties, such as improved porosity (e.g., less porosity), improved surface roughness (e.g., less surface roughness, i.e., a smoother surface), and/or better mechanical properties (e.g., improved surface hardness), among others.

In one aspect, after the forging step the final forged product may optionally be annealed. Annealing is a heat treatment that alters the physical and sometimes chemical properties of a material to increase its ductility and to make it more workable. It involves heating a material to above its glass transition temperature, maintaining a suitable temperature, and then cooling. Annealing, in some embodiments, can induce ductility, soften material, relieve internal stresses, refine the structure by making it homogeneous, and improve cold working properties.

The annealing step may facilitate the relieving of residual stress in the metal-shaped preform due to the forging step. In some embodiments, the annealing time is at least about 1 hour. In another embodiment, the time is at least about 2 hours. In yet another embodiment, the time is not greater than about 4 hours. In another embodiment, the time is not greater than about 3 hours.

In one embodiment, the metal shaped-preform is a low ductility material, such as a metal matrix composite or an intermetallic material. In one embodiment, the metal shaped-preform is titanium aluminide. Using the new processes disclosed herein may facilitate more economical production of final forged products from such low ductility materials. For instance, the low ductility materials may be forged using dies and/or tooling that are at a lower temperature than the low ductility material. Thus, in one embodiment, the forging is absent of isothermal forging (i.e., the forging process does not include isothermal forging), and thus can include any of the stock temperature versus die temperature differentials noted in the above-paragraph.

The step of preparing the metal shaped-preform via additive manufacturing may include incorporating a building substrate into the metal shaped-preform. In one embodiment, material is added to a building substrate via additive manufacturing to produce the metal shaped-preform. As used herein, "building substrate" and the like means a solid material which may be incorporated into a metal shaped-preform. The metal shaped-preform, which includes the building substrate, may be deformed. Thus, the final product may include the building substrate as an integral piece.

As mentioned above, a final forged product may realize an amount (e.g., a preselected amount) of true strain due to the contacting step. In some embodiments, the strain realized by the final forged product may be non-uniform throughout the final forged product due to, for example, the shape of the forging dies and/or the shape of the metal shaped-preform. Thus, the final forged product may realize areas of low and/or high strain. Accordingly, the building substrate may be located in a predetermined area of the metal shaped-preform such that after the forging, the building substrate is located in a predetermined area of low strain of the final forged product. An area of low strain may be predetermined based on predictive modeling or empirical testing.

The building substrate may have a predetermined shape and/or predetermined mechanical properties (e.g., strength, toughness to name a few). In one embodiment, the building substrate may be a pre-wrought base plate. In one embodiment, the shape of the building substrate may be predetermined based on the shape of the area of low strain. In one embodiment, the mechanical properties of the building substrate may be predetermined based on the average true strain realized by the metal shaped-preform and/or the true strain realized within the area of low strain. In one embodiment, two or more building substrates may be incorporated into a metal-shaped preform. In one embodiment, the building substrate comprises a pre-wrought base plate.

The building substrate may be made from any metal suited for both additive manufacturing and forging, including, for example metals or alloys of titanium, aluminum, nickel (e.g., INCONEL), steel, and stainless steel, among others. In one embodiment, the building substrate is made of the same material(s) as the rest of the metal-shaped preform. In one embodiment, the material added to the metal shaped preform may be a first material, whereas the building substrate may be made of a second material. In one embodiment, the first material may have a first strength and the second material may have a second strength. In one embodiment, the first material may have a first fatigue property and the second material may have a second fatigue property.

In some embodiments, the following benefits are expected: healing of porosity, wrought microstructure, net shape geometry with improved surface finish, internal passages as required by desired application.

In some embodiments, localized compressive stress is applied around the internal passages in order to enhance fatigue performance of the metal around and near the internal passages.

In some embodiments, a final product with superior properties, better shape tolerance and surface attributes and product features is attained by combining three independent technologies, additive manufacturing, thermomechanical processing and reverse 3-D modeling. Some embodiments may be ideally suited for applications such as turbine blades and other high temperature demanding components.

While various embodiments of the present disclosure have been described in detail, it is apparent that modification and adaptations of those embodiments will occur to those skilled in the art. However, it is to be expressly understood that such modifications and adaptations are within the scope of the appended claims.

## BRIEF DESCRIPTION OF THE DRAWINGS

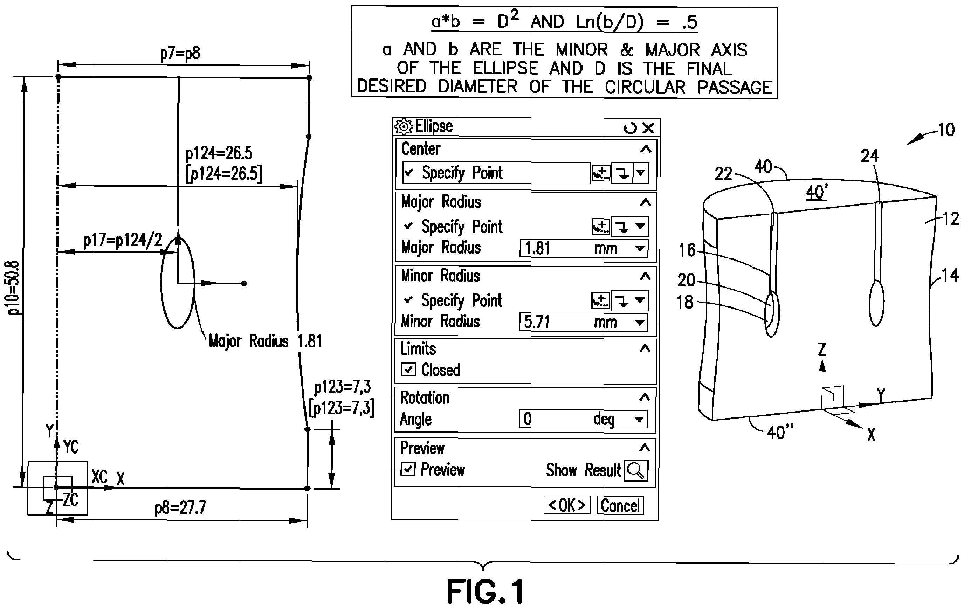

Figure 1 is a schematic of an embodiment of the FEM modeling completed to design an AM preform having a body dimension and internal passage dimension configured to undergo deformation (i.e. with a filler material retained within the internal passage) and provide a product form having a final body dimension and internal passage dimension, in accordance with the instant disclosure.

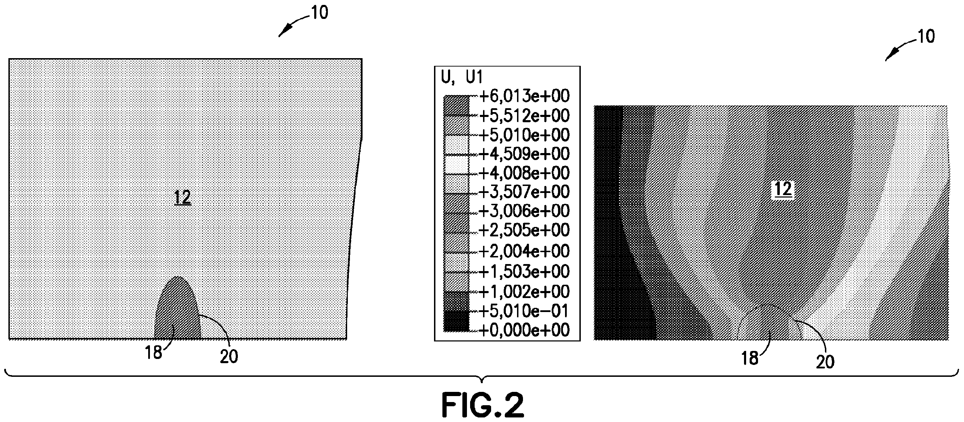

Figure 2 depicts a cut away side view of a portion of the computer model results of the initial geometry of the AM preform (left) and final geometry of the product (right) expected utilizing the computer modeling approach, in accordance with one or more embodiments of the instant disclosure.

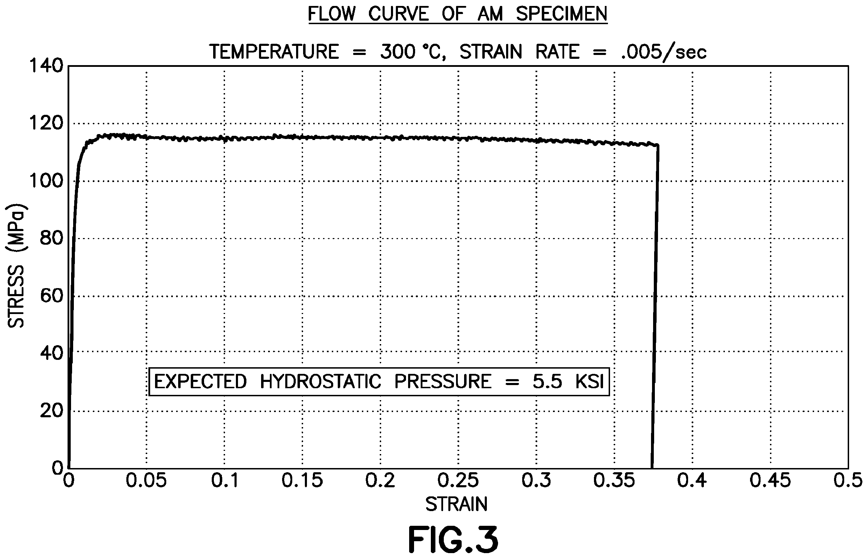

Figure 3 is a graph depicting the computer modeled flow curve during deformation at 300°C and a strain rate of 0.005/sec, showing stress (MPa) as a function of Strain. As depicted in Figure 3, upon straining (deforming) the AM preform, Stress immediately, sharply increases and levels off to about 115 MPa at approximately 0.02-0.03.

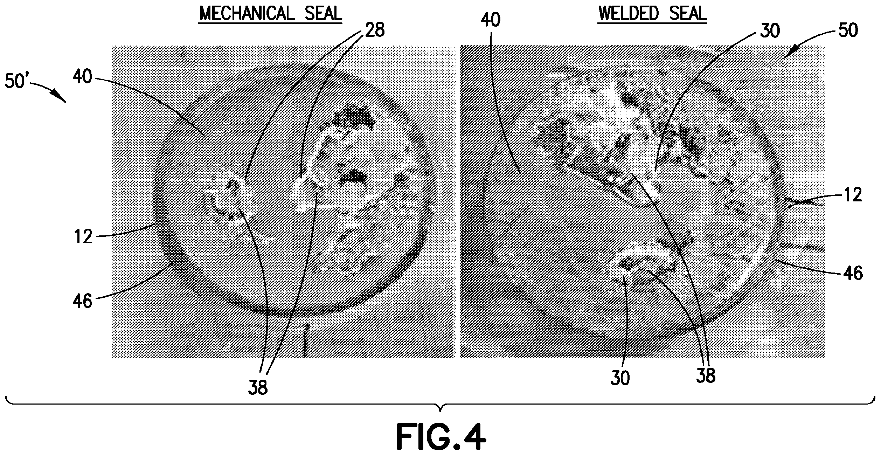

Figure 4 provides two top view photographs depicting embodiments of two products made via a deformation step at 300°C (i.e. with filler material initially retained within the cavity), in accordance with the disclosure. Referring to Figure 4, the mechanically sealed AM preform exhibited leaking of filler material, as did the welded plug seals depicted on the right.

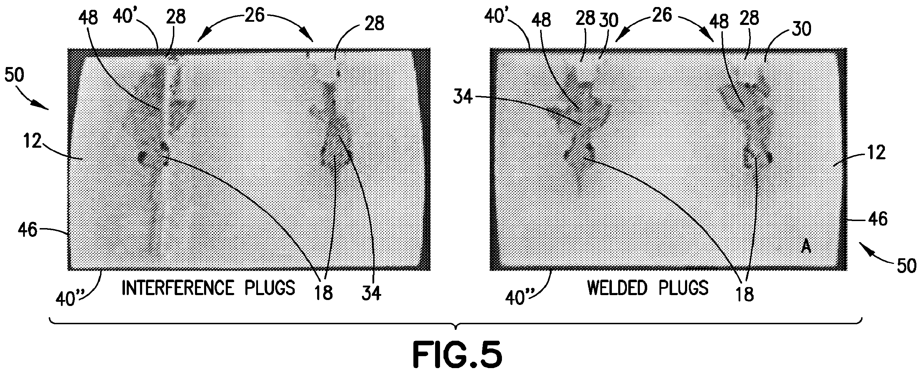

Figure 5 depicts two photographs of cross-sectional views of the embodiments of the products from Figure 4, depicting the filler material retained in the internal passages, although some leaking was observed adjacent to the enclosure component (e.g. mechanical seal/interference plug and welded seal/plug), in accordance with the instant disclosure. Without being bound by any particular mechanism or theory, it is believed that the collapse of feed passages and cracking of internal passages shown in Figure 5 is attributable to the failure of the seals (leaking) depicted in Figure 4.

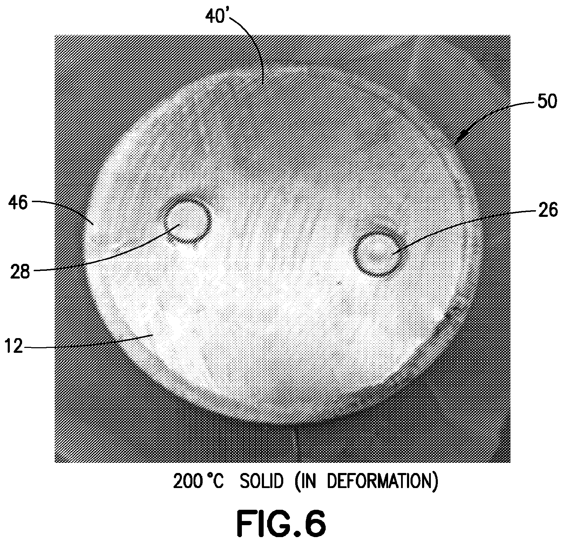

Figure 6 depicts a top plan view photograph of the product deformed at 200°C, under constant load conditions, in accordance with the instant disclosure. Since the filler material was deformed at temperature conditions where the filler was solid, no leaking occurred.

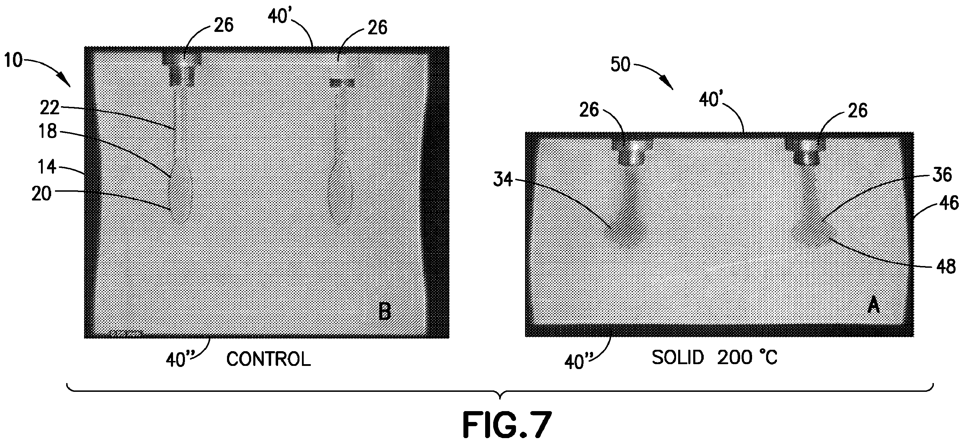

Figure 7 depicts photographs of cross sections of two embodiments in accordance with the instant disclosure. On the left, a proxy for the "before" AM preform is depicted, wherein the AM preform body is a control AM preform (that did not undergo a deformation step prior to cross-sectioning), where the AM preform is configured with preform body dimensions (i.e. slightly concave sidewalls along the non-deformation surface of the body) and preform internal passage dimensions (i.e. elliptically shaped void), where the fill material is shown filling the internal passage (e.g. channels and void), further wherein the interference plugs are shown extending from the upper surface of the body into the opening of the internal passage (and extending down into a given distance into the channel). On the right, the image of the cross-section of the embodiment of the product "after" deformation step is in stark contrast with the "before" AM preform on the left. More specifically, the product or "after" embodiment shows product body dimensions with a shorter height of the product, and the concave walls of the AM preform have been directed in an outward direction to a near perpendicular when compared to the product body top and bottom surfaces. Moreover, the internal passage is configured with product internal passage dimensions (i.e. the void was transformed by deformation from an elliptical shape to a circular shape), and the channels have also undergone axial shrinking and a slight increase in perceived diameter of the channel, via the deformation step. As can be seen from Figure 7, the internal cavities deformed uniformly and there was no/minimal evidence of cavity collapse or cracking in the passages.

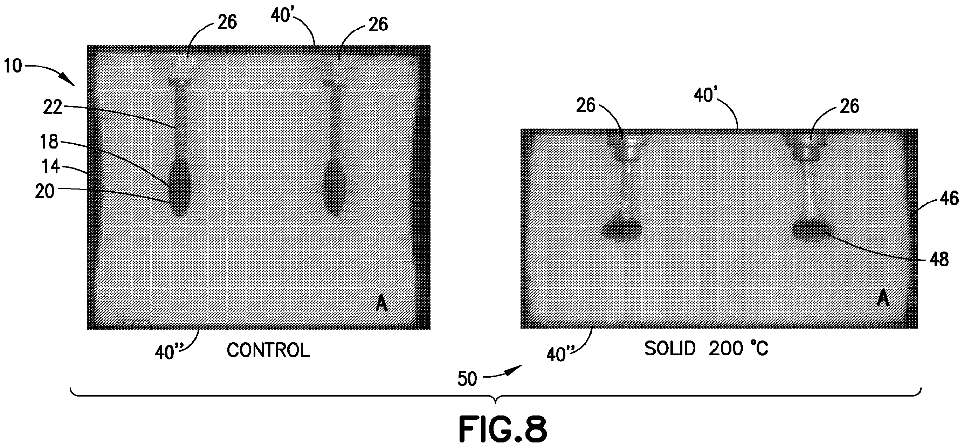

Figure 8 depicts the embodiments of Figure 7, once the filler material was removed (melted and removed) from the internal passage (e.g. void and channels). As visually observable, after removing the filler material (tin) there was little to no chemical reactivity and/or wettability of materials. Also, it is noted the integrity of feed passages was maintained after deformation and there was minimal (if any) cracking observed in the internal passages.

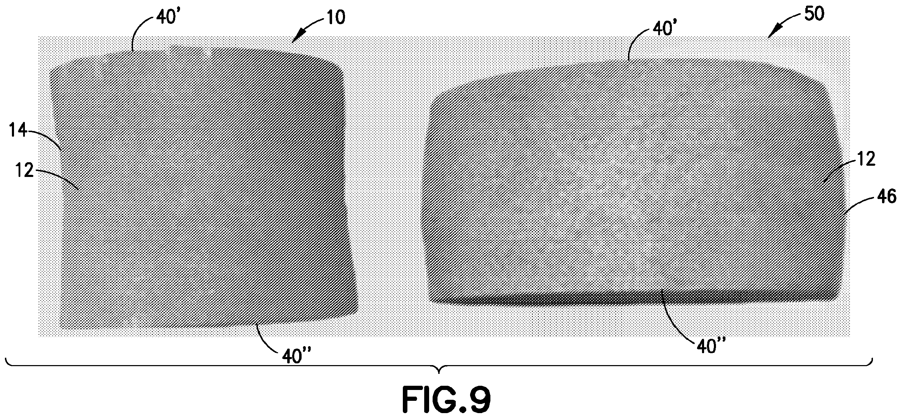

Figure 9 depicts the external profile of the samples before and after deformation. Without being bound by a particular mechanism and/or theory, it is believed that the slight barreling visually observable after deformation is attributable to the friction between the platens and the work piece.

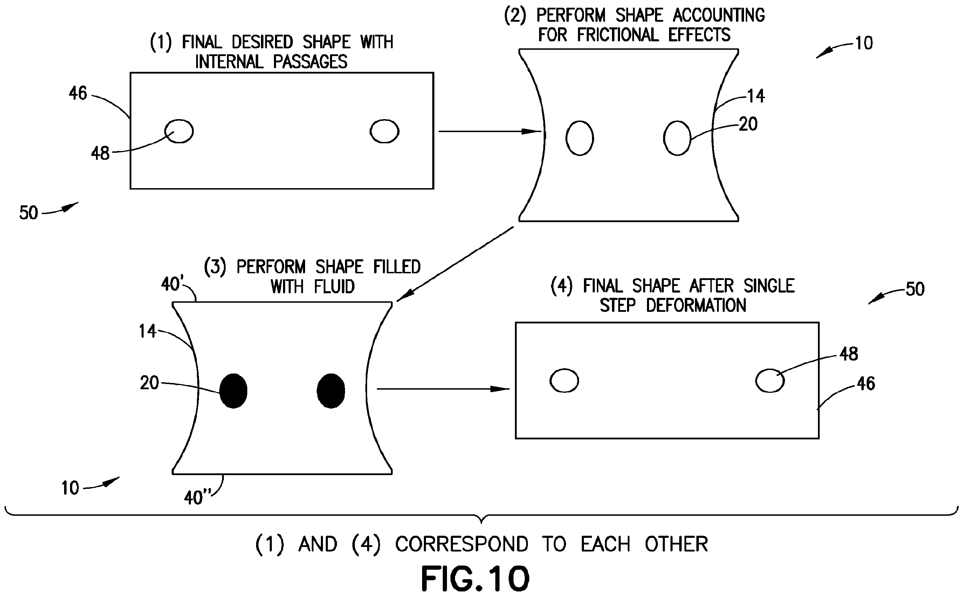

Figure 10 depicts a schematic cross-sectional view of an embodiment of the method, depicting the steps of creating (designing) an AM preform based on the final product specifications (body dimension and internal passage dimension), additively manufacturing an AM preform having the body dimensions and internal passage dimensions, inserting (and enclosing) the filler material within the AM preform, and deforming the AM preform to create a product having the product specifications (body dimension and internal passage dimension) after deforming, in accordance with the instant disclosure.

## DETAILED DESCRIPTION

A series of experiments were completed in order to evaluate the several of the embodiments of the instant disclosure.

### Example: Computer Modeling of AM Preform and Product

A computer modeling approach was evaluated to select parameters of the AM preform (e.g. body dimension and void dimension) to provide a resulting product having a product body dimension and product void dimension. Finite Element Modeling was completed, such that reverse shape modeling was used to account for the deformation and initial (AM preform) vs. final (product) boundary conditions (body dimensions and void dimensions) in the components.

A true strain of 50% was selected as a bogie for validation and it was assumed that there was no die friction, that the cavity was filled (i.e. completely filled) with an incompressible fluid, and that incompressible filler material was retained in the AM preform via sealing (e.g. enclosure sufficient to retain the filler material during deformation conditions). A final internal passage (void) in the product was targeted to be a 0.25" diameter circle (D = 0.25"). Accordingly, an elliptical shape with the cross sectional area of the desired circle size and aspect ratio necessary to become circular after deformation was calculated as shown in Figure 1. The initial shape (of body and internal passage, including void and channel) was estimated by a trial and error procedure to obtain a near straight edge after deformation and a circular shape for the internal passages.

Figure 1 is a schematic of an embodiment of the FEM modeling completed to design an AM preform having a body dimension and internal passage dimension configured to undergo deformation (i.e. with a filler material retained within the internal passage) and provide a product form having a final body dimension and internal passage dimension. Initial geometry of the AM component, in accordance with the instant disclosure. Depicted in Figure 1 is the cut-away side view of an engineering drawing of the AM preform designed in the corresponding Example section, a table depicting some of the parameters of the AM preform (e.g. dimensions), a mathematical algorithm utilized in the FEM modeling, and a perspective cut away view of the cross-section depicted in the engineering drawing, depicting the differing three-dimensional depths of the void and the channels of the internal passage, as well as the concavity of the body sidewall (e.g. at the non-deformation surface/sidewall), in accordance with one or more embodiments of the instant disclosure.

Figure 2 depicts a cut away side view of a portion of the computer model results of the initial geometry of the AM preform (left) and final geometry of the product (right) expected utilizing the computer modeling approach, in accordance with one or more embodiments of the instant disclosure. With reference to Figure 2, the initial geometry and final expected geometry are depicted after deformation, under isothermal conditions, and frictionless axisymmetric compression. Figure 2 (initial vs. final) contrasts the different external shape profile (loss of concavity of sidewall from preform to product) as well as the change in shape of the internal cavity (preform depicts an elliptical portion vs. product depicts a circular portion).

### Example: AM preform build with filler material (incompressible material)

Four identical AM preforms were additively manufactured using a laser powder bed additive manufacturing process on the EOS M280. The feedstock material used to make the parts was an AlSi10Mg alloy powder.

A 2" diameter and 2" high cylindrical sample was chosen as a prototype sample for experimental validation, based on factors including internal passage size and tonnage limit on the deformation simulator. Each AM preform was configured with a concentric internal void, where the void was configured with two corresponding channels configured to communicate from the void to the surface of the body of the AM preform. The two vertical passages (channels) in the AM preforms were utilized to enable filling the cavity via one channel while and the other to bleeding the air during filling and ensure a proper and complete fill.

Three of the AM preforms were heated to a temperature of 325°C and then filled with a filler material using a tin feed rod of 0.125 inch diameter which melted in situ (in the cavity). Complete fill was confirmed by visually observing molten tin from the bleed passage (i.e. second channel). The feed and bleed ports (channels) were closed (e.g. sealed) either by: plugs with interference fit or by plugging the openings of the channels and then welding them with 6061 filler alloy.

### Example: AM preform Deformation

A deformation simulator was utilized on the three AM preforms. The deformation simulator was a compression machine (press) with a capacity of 150,000 lbs, configured with a furnace to heat the press surfaces and/or AM preform to deform via hot compression. The deformation simulator of this experimental section was utilized as a proxy for a single step forging die, where the simulator allowed for control over temperature, strain rate and strain of the AM preform to make a product having wrought properties.

During deformation, the furnace was heated up to the indicated temperature and deformation was completed (e.g. with heated surfaces of the press). In addition, there were PTFE polymer sheets configured between the AM preform deformation surfaces (upper and lower surfaces of the AM preform) and the press surfaces to promote frictionless surfaces of deformation. The estimated internal hydrostatic pressure was 5.5 KSI, and it is noted that the hydrostatic pressure during uniaxial deformation is about 1/3 of the applied flow stress.

Two samples (one with an interference fit plug and one with welded plugs) were then deformed in axisymmetric compression at 300°C and a strain rate of 0.005/sec. A hold time of 30 minutes prior to deformation was provided to ensure that the tin filler was completed melted prior to deformation. Figure 3 shows the flow curve as measured during deformation.

As can be seen in Figure 5, molten tin is depicted on top of the product, which indicates that leakage occurred. Without being bound by a particular mechanism or theory, the leakage of molten tin during deformation is believed to be the cause of the resulting collapse of the cavity and/or cracking of the cavity (i.e. leaking resulted in uncontrolled distortion of the internal passages during deformation).

The third sample was deformed in the deformation simulator at a temperature of 200°C, such that the filler material (tin) was maintained in a solid state during deformation in order to prevent escape from the cavity/void (leaking). This experiment was completed under constant load, as the maximum tonnage on the simulator was exceeded in maintaining the desired strain rate of 0.005/sec. As shown in Figure 6, there was no evidence of any molten tin leakage on the top surface of the product.

It was observed that filling the cavity (internal passage) with a molten filler material which solidifies before/during deformation provided a suitable product and corresponding cavity. Also, while it was observed that both molten filler material runs leaked, it was unclear if each of the seals was complete/ appeared as sufficient prior to deformation, such that it would be expected to retain the molten filler material during deformation at a pressure of 5.5 KSI.

Based on the above experiments, without being bound by any particular mechanism or theory, it is believed that deformation of AM preforms with molten filler material configured in (e.g. enclosed and/or sealed within) at least one internal passage(s) will result in products having internal passages (e.g. voids and/or channels) in accordance with the instant disclosure, so long as sufficient enclosures/seals of the molten filler material are in place prior to (and during) deformation.

**Prophetic Example: Enclosure of Fill Material with AM Build Layers in AM Preform:**

As an alternative example not forming part of the present invention, the filler material is enclosed in the internal passage of an AM preform during the AM build process. More specifically, a filler material is added to an AM preform, (if needed) allowed to solidify, and then additive manufacturing is resumed, such that additional build layers are configured over the opening to form an AM enclosure that retains the filler material within the AM preform.

In yet another embodiment, if the filler material is liquid at additive manufacturing conditions, then a cover (e.g. substrate configured to extend across the opening of the internal passage) is fitted into/onto the opening, followed by successive additive manufacturing build layers to enclose the filler material into the internal passage.

In another embodiment, after the filler material is added to the internal passage, the opening is capped (e.g. with a small plug), the surface is milled (i.e. to create a continuous build surface) and then returned to the additive machine to deposit at least one additional build layer onto the cap (and/or over the surface of the body that is configured with the opening of the internal passage).

In one or more of these examples, additional build layers are configured to provide an enclosure with a predetermined thickness (i.e. sufficient to retain the filler material in the internal passage while undergoing the deformation step).

**Reference numbers:**

AM preform 10
Body 12
Preform body dimension 14
Internal passage (e.g. void + channel) 16
Void 18
Preform void dimension 20
Channel 22
Channel dimension 22
Opening 24
Enclosure 26
Cap (e.g. plug) 28

Weld 30
AM cover 32
Filler material (e.g. incompressible material) 34
Solid 36
Liquid (e.g. molten or liquid) 38
Within body:

Deformation faces/surface onto which deformation step is applied: 40 (e.g. 40', 40")
Preform extension (e.g. configured for channel and/cap outside of deformation zone, not on deformation face/surface) 42
Product 50
Product body dimension 46
Product void dimension 48

**Claims**

1. A method comprising:

additively manufacturing a feedstock material to create an AM preform (10), wherein the AM preform is configured with a body (12) having an internal passage (16) defined therein, wherein the internal passage further includes at least one of a void (18) and a channel (22);
inserting a filler material (34) into the internal passage of the AM preform;
closing the AM preform with an enclosure component (26) such that the filler material is retained within the internal passage of the AM preform, the enclosure component being selected from a mechanical attachment device, a cap, a plug or a combination thereof; and
deforming the AM preform to a sufficient amount to create a product (50) having an internal passage therein, wherein the product is configured with wrought properties for that material via the deforming step.

2. The method of claim 1, wherein the closing step further comprises sealing the filler material within the AM preform via an enclosure component.

3. The method of claim 1 or claim 2, wherein the closing step further comprises pressing a plug (28) into an opening in the body to retain the filler material within the internal passage.

4. The method of any preceding claim, wherein the deforming step further comprises hot working.

5. The method of claim 4, further comprising annealing the product, and/or cold working the product.

6. The method of any preceding claim, wherein the deforming step further comprises forging and preferably wherein the deforming step further comprises a single die forging.

7. The method of any preceding claim, wherein the deforming step further comprises rolling, and/or ring rolling, and/or extruding.

8. The method of any preceding claim, further comprising: removing the filler material from the internal passage of the product and preferably wherein the removing step further comprises:

opening the sealed product having filler material therein;
melting the filler material; and
draining the filler material from the product.

9. The method of any preceding claim, further comprising finishing the surface of the product.

10. The method of claim 9, wherein finishing is selected from the group consisting of:

machining, polishing, surface finishing, and/or combinations thereof, or wherein
the deforming step further comprises:
prior to deforming, preheating the AM preform to melt the filler material retained within the internal passage.

11. The method of any preceding claim, wherein the inserting step further comprises: waiting a sufficient duration of time for the filler material to solidify in the internal passage; and deforming the AM preform having a solidified filler material therein.

12. The method of any preceding claim, wherein the filler material comprises at least one of an oil, a polymer, an organic and/or inorganic solvent, a metal and/or metal alloy.

13. The method of claim 1 further comprising, prior to the additively manufacturing step, the steps of:

selecting a target product having target wrought properties; and
designing a target AM preform with a target preform body dimension (14) and a target preform void dimension (20),
wherein the target AM preform is configured to provide the target product having a target product body dimension (46) and a target product void dimension (48) upon deformation,
wherein the body of the AM preform produced in the additive manufacturing step has a preform body dimension corresponding to the target preform body dimension, and wherein the void of the AM preform produced in the additive manufacturing step has a preform void dimension corresponding to the target preform void dimension,
wherein the AM preform is deformed to a sufficient amount to form the target product having the target wrought properties; and
wherein, via the design step, the product has a product body having a product body dimension corresponding to the target product body dimension, and a product void having a product void dimension corresponding to the target product void dimension.

14. The method of claim 13, wherein the designing step further comprises designing the target AM preform to have target preform wrought properties, and wherein the deforming step comprises at least one of: forging, thermomechanical processing, and cold working.

**Patentansprüche**

1. Verfahren, Folgendes umfassend:

Additives Herstellen eines Rohstoffmaterials zum Erzeugen eines AM-Vorformlings (10),
wobei der AM-Vorformling mit einem Körper (12) konfiguriert ist, der einen inneren Durchgang (16), der darin definiert ist, aufweist, wobei der innere Durchgang ferner einen Hohlraum (18) und/oder einen Kanal (22) beinhaltet;
Einführen eines Füllmaterials (34) in den inneren Durchgang des AM-Vorformlings;
Schließen des AM-Vorformlings mit einer Gehäusekomponente (26), derart, dass das Füllmaterial innerhalb des inneren Durchgangs des AM-Vorformlings zurückgehalten wird, wobei die Gehäusekomponente aus einer mechanischen Befestigungsvorrichtung, einer Kappe, einem Stopfen oder einer Kombination davon, ausgewählt wird; und
Verformen des AM-Vorformlings auf eine ausreichende Menge, um ein Produkt (50), das einen inneren Durchgang darin aufweist, zu erzeugen, wobei das Produkt über den Verformungsschritt mit Schmiedeeigenschaften für dieses Material konfiguriert ist.

2. Verfahren nach Anspruch 1, wobei der Schließschritt ferner ein Versiegeln des Füllmaterials innerhalb des AM-Vorformlings über eine Gehäusekomponente umfasst.

3. Verfahren nach Anspruch 1 oder 2, wobei der Schließschritt ferner ein Drücken eines Stopfens (28) in eine Öffnung in dem Körper umfasst, um das Füllmaterial innerhalb des inneren Durchgangs zurückzuhalten.

4. Verfahren nach einem der vorhergehenden Ansprüche, wobei der Verformungsschritt ferner Heißbearbeiten umfasst.

5. Verfahren nach Anspruch 4, ferner umfassend ein Tempern des Produkts und/oder ein Kaltbearbeiten des Produkts.

6. Verfahren nach einem der vorhergehenden Ansprüche, wobei der Verformungsschritt ferner ein Schmieden umfasst und vorzugsweise wobei der Verformungsschritt ferner ein Einzelgesenkschmieden umfasst.

7. Verfahren nach einem der vorhergehenden Ansprüche, wobei der Verformungsschritt ferner ein Walzen und/oder Ringwalzen und/oder Extrudieren umfasst.

8. Verfahren nach einem vorhergehenden Anspruch, ferner Folgendes umfassend:
Entfernen des Füllmaterials aus dem inneren Durchgang des Produkts und vorzugsweise wobei der Entfernungsschritt ferner Folgendes umfasst:

Öffnen des versiegelten Produkts, das Füllmaterial darin aufweist;
Schmelzen des Füllmaterials; und
Ablassen des Füllmaterials aus dem Produkt.

9. Verfahren nach einem vorhergehenden Anspruch, ferner umfassend ein Veredeln der Oberfläche des Produkts.

10. Verfahren nach Anspruch 9, wobei das Veredeln aus der Gruppe ausgewählt ist, die aus Folgendem besteht:

Spanabheben, Polieren, Oberflächenveredeln und/oder Kombinationen davon, oder wobei der Verformungsschritt ferner Folgendes umfasst:
Vorwärmen des AM-Vorformlings vor dem Verformen, um das innerhalb des inneren Durchgangs zurückgehaltene Füllmaterial zu schmelzen.

11. Verfahren nach einem vorhergehenden Anspruch, wobei der Einführungsschritt ferner Folgendes umfasst:

Warten einer ausreichenden Zeitdauer, bis sich das Füllmaterial in dem inneren Durchgang verfestigt hat; und
Verformen des AM-Vorformlings mit einem verfestigtem Füllmaterial darin.

12. Verfahren nach einem der vorhergehenden Ansprüche, wobei das Füllmaterial wenigstens eines von einem Öl, einem Polymer, einem organischen und/oder anorganischen Lösungsmittel, einem Metall und/oder einer Metalllegierung umfasst.

13. Verfahren nach Anspruch 1, vor dem additiven Herstellungsschritt ferner die folgenden Schritte umfassend:

Auswählen eines Zielprodukts, das verformte Zieleigenschaften aufweist; und
Entwerfen eines Ziel-AM-Vorformlings mit einer Zielvorformlingkörperabmessung (14) und einer abmessungZielvorformlinghohlraumabmessung (20), wobei der Ziel-AM-Vorformling konfiguriert ist, um das Zielprodukt, das eine Zielprodukthohlraumabmessung (46) aufweist, und eine Zielprodukthohlraumabmessung (48) bei Verformung bereitzustellen, wobei der Körper des AM-Vorformlings, der in dem additiven Herstellungsschritt hergestellt wird, eine Vorformlingkörperabmessung aufweist, die der Zielvorformlingkörperabmessung entspricht, und wobei der Hohlraum des AM-Vorformlings, der in dem additiven Herstellungsschritt hergestellt wird, eine Vorformlinghohlraumabmessung entsprechend der Zielvorformlinghohlraumabmessung aufweist, wobei der AM-Vorformling auf eine ausreichende Menge verformt wird, um das Zielprodukt, das Zielverformungseigenschaften aufweist, auszubilden; und
wobei, über den Entwurfsschritt, das Produkt einen Produktkörper aufweist, der eine Produktkörperabmessung aufweist, die der Zielproduktkörperabmessung entspricht, und einen Produkthohlraum, der eine Produkthohlraumabmessung, die der Zielprodukthohlraumabmessung entspricht, aufweist.

14. Verfahren nach Anspruch 13, wobei der Entwurfsschritt ferner das Entwerfen des Ziel-AM-Vorformlings umfasst, um verformte Eigenschaften des Zielvorformlings aufzuweisen, und wobei der Verformungsschritt Folgendes umfasst:
Schmieden, thermomechanisches Bearbeiten und/oder Kaltbearbeiten.

**Revendications**

1. Procédé comprenant:

la fabrication additive d'un matériau de base pour créer une préforme de FA (10), la préforme de FA étant conçue avec un corps (12) ayant un passage interne (16) défini à l'intérieur, le passage interne comportant en outre un vide (18) et/ou un canal (22) ;

l'insertion d'un matériau d'apport (34) dans le passage interne de la préforme de FA ;

la fermeture de la préforme de FA avec un composant d'enceinte (26) de telle sorte que le matériau d'apport est retenu dans le passage interne de la préforme de FA, le composant d'enceinte étant choisi parmi un dispositif de fixation mécanique, un capuchon, un bouchon ou une combinaison de ceux-ci ; et

la déformation de la préforme de FA en une quantité suffisante pour créer un produit (50) ayant un passage interne, le produit étant conçu avec des propriétés corroyées pour ce matériau par l'intermédiaire de l'étape de déformation.

2. Procédé selon la revendication 1, l'étape de fermeture comprenant en outre l'étanchéité du matériau d'apport à l'intérieur de la préforme de FA par l'intermédiaire d'un composant d'enceinte.

3. Procédé selon la revendication 1 ou la revendication 2, l'étape de fermeture comprenant en outre la pression d'un bouchon (28) dans une ouverture dans le corps pour retenir le matériau d'apport dans le passage interne.

4. Procédé selon l'une quelconque des revendications précédentes, l'étape de déformation comprenant en outre un corroyage.

5. Procédé selon la revendication 4, comprenant en outre le recuit du produit et/ou l'écrouissage du produit.

6. Procédé selon l'une quelconque des revendications précédentes, l'étape de déformation comprenant en outre le forgeage et de préférence l'étape de déformation comprenant en outre un forgeage par matriçage unique.

7. Procédé selon l'une quelconque des revendications précédentes, l'étape de déformation comprenant en outre le laminage et/ou le laminage circulaire et/ou l'extrusion.

8. Procédé selon l'une quelconque des revendications précédentes, comprenant en outre :
l'élimination du matériau d'apport du passage interne du produit et de préférence l'étape d'élimination comprenant en outre :

l'ouverture du produit scellé contenant un matériau d'apport ;
la fonte du matériau d'apport ; et
la vidange du matériau d'apport du produit.

9. Procédé selon l'une quelconque des revendications précédentes, comprenant en outre la finition de la surface du produit.

10. Procédé selon la revendication 9, la finition étant choisie dans le groupe constitué de :
l'usinage, le polissage, la finition de surface et/ou leurs combinaisons, ou l'étape de déformation comprenant en outre :
avant la déformation, la préchauffe de la préforme de FA pour faire fondre le matériau d'apport retenu dans le passage interne.

11. Procédé selon l'une quelconque des revendications précédentes, l'étape d'insertion comprenant en outre :

l'attente pendant une durée suffisante pour que le matériau d'apport se solidifie dans le passage interne ; et
la déformation de la préforme de FA contenant un matériau d'apport solidifié.

12. Procédé selon l'une quelconque des revendications précédentes, le matériau d'apport comprenant au moins l'un parmi une huile, un polymère, un solvant organique et/ou inorganique, un métal et/ou un alliage métallique.

13. Procédé selon la revendication 1, comprenant en outre, avant l'étape de fabrication additive, les étapes suivantes :

le choix d'un produit cible ayant des propriétés corroyées cibles ; et
la conception d'une préforme de FA cible avec une dimension de corps de préforme cible (14) et une dimension de vide de préforme cible (20), la préforme de FA cible étant conçue pour fournir le produit cible ayant une dimension de corps de produit cible (46) et une dimension de vide de produit cible (48) lors de la déformation, le corps de la préforme de FA produite à l'étape de fabrication additive ayant une dimension de corps de préforme correspondant à la dimension de corps de préforme cible, et le vide de la préforme de FA produite dans l'étape de fabrication additive ayant une dimension de vide de préforme correspondant à la dimension de vide de préforme cible, la préforme de FA étant déformée en une quantité suffisante pour former le produit cible ayant les propriétés corroyées cible ; et
par l'intermédiaire de l'étape de conception, le produit ayant un corps de produit ayant une dimension de corps de produit correspondant à la dimension de corps de produit cible, et un vide de produit ayant une dimension de vide de produit correspondant à la dimension de vide de produit cible.

**14.** Procédé selon la revendication 13, l'étape de conception comprenant en outre la conception de la préforme de FA cible pour obtenir des propriétés corroyées de la préforme cible, et l'étape de déformation comprenant : le forgeage, et/ou le traitement thermomécanique, et/ou le'écrouissage.

FIG.1

FIG.2

FLOW CURVE OF AM SPECIMEN

TEMPERATURE = 300 °C, STRAIN RATE = .005/sec

EXPECTED HYDROSTATIC PRESSURE = 5.5 KSI

STRESS (MPa)

STRAIN

FIG.3

MECHANICAL SEAL

WELDED SEAL

FIG.4

WELDED PLUGS

INTERFERENCE PLUGS

FIG.5

200°C  SOLID  (IN  DEFORMATION)

FIG.6

FIG.7

FIG.8

EP 3 268 146 B1

FIG.9

(1) FINAL DESIRED SHAPE WITH INTERNAL PASSAGES

(2) PERFORM SHAPE ACCOUNTING FOR FRICTIONAL EFFECTS

(3) PERFORM SHAPE FILLED WITH FLUID

(4) FINAL SHAPE AFTER SINGLE STEP DEFORMATION

(1) AND (4) CORRESPOND TO EACH OTHER

FIG.10

CUT AWAY SIDE VIEW, DEPICTS Am PREFORM WITH PREFORM EXTENSION CONFIGURED AWAY FROM DEFORMATION FACES OF BODY FILLED WITH SOLID FILLER MATERIAL WITH CAP ENCLOSURE ALSO CONFIGURED OUTSIDE OF DEFORMATION FACES

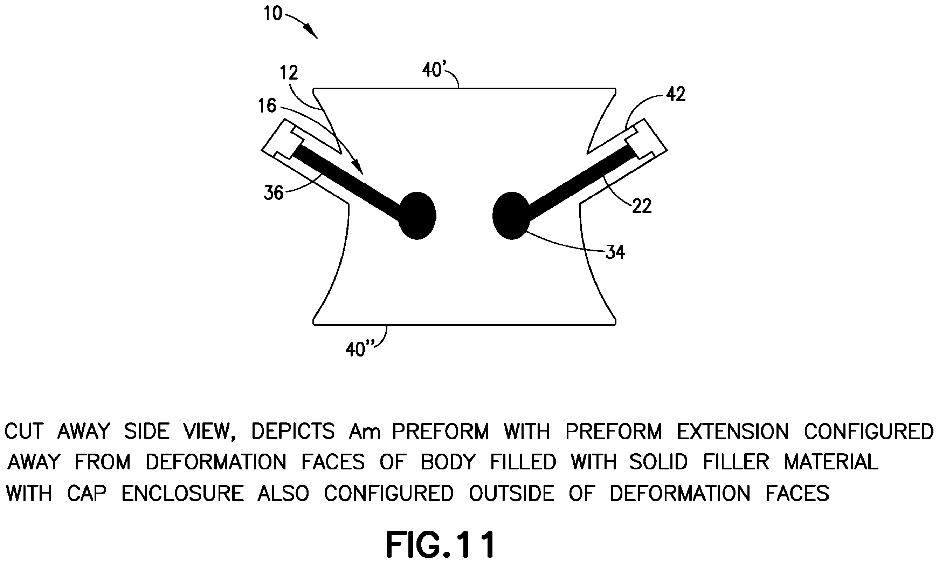

**FIG.11**

**REFERENCES CITED IN THE DESCRIPTION**

**Patent documents cited in the description**

- US 20130039799 A
- EP 2551040 A
- US 20150013144 A
- US 20130098575 A
- CN 1861296

**Non-patent literature cited in the description**

- **M. B. PRIME.** Experimental Procedure for Crack Compliance (Slitting) Measurements of Residual Stress. *LA-UR-03-8629, Los Alamos National Laboratory Report,* 2003